# EUROPÄISCHE PATENTSCHRIFT

(11) **EP 1 423 222 B1**
(45) Veröffentlichungstag und Bekanntmachung des Hinweises auf die Patenterteilung: **15.02.2006**
(21) Anmeldenummer: 02764824.5
(22) Anmeldetag: 25.07.2002
(51) Int. Cl.: B22F 3/11

(54) **VERBUNDWERKSTOFF AUS EINEM AUFGESCHÄUMTEN METALLKERN UND MASSIVEN DECKBLECHEN**
COMPOSITE MATERIAL AND COMPONENT PRODUCED THEREFROM COMPRISING A FOAMED METAL CORE AND SOLID COVER SHEETS, USE AND METHOD FOR PRODUCTION THEREOF
MATERIAU COMPOSITE ET COMPOSANT FABRIQUE A PARTIR DE CE MATERIAU, FORME D'UNE AME METALLIQUE EXPANSEE ET D'UNE TOLE DE RECOUVREMENT MASSIVE, SON UTILISATION ET SON PROCEDE DE FABRICATION

(30) Priorität: 26.07.2001 DE 10136370
(43) Veröffentlichungstag der Anmeldung: 02.06.2004
(73) Patentinhaber: alm GmbH, 66121 Saarbrücken (DE)
(72) Erfinder: SCHWINGEL, Dirk, 66564 Ottweiler (DE); THEOBALD, Michael, 66646 Marpingen (DE)
(74) Vertreter: von Samson-Himmelstjerna, Friedrich
(86) Internationale Anmeldenummer: PCT/EP2002/008548
(87) Internationale Veröffentlichungsnummer: WO 2003/009956

(56) Entgegenhaltungen:
- EP-A- 1 000 690
- DE-A- 3 905 871
- DE-A- 19 753 658

## Beschreibung

Mehrschichtige Verbundwerkstoffe sind seit etlichen Jahren bekannt. Dabei können sich die einzelnen Schichten sowohl im Werkstoff selbst als auch in dessen strukturellen Eigenschaften, etwa seiner Porosität, unterscheiden. Insbesondere unter dem Aspekt des Leichtbaus, aber auch seiner guten isolatorischen Eigenschaften wegen hat sich in den letzten Jahren das Augenmerk auf den Einsatz von metallischen und nicht metallischen Schäumen in mehrschichtigen Verbundwerkstoffen gerichtet. Aus der DE 39 05 871 A1 ist beispielsweise die Verwendung eines hoch porösen anorganischen Materials als thermischer Isolator in einem dreischichtigen Verbundwerkstoff bekannt.

Die Erfindung betrifft ein Verfahren zur Herstellung eines metallischen Verbundwerkstoffes, bestehend aus massiven metallischen Deckschichten und einem dazwischen gelagerten aufgeschäumten, geschlossenporigen, metallischen Kern, wobei aus den Deckschichten und einer dazwischen eingebrachten Mischung aus mindestens einem Metallpulver und mindestens einem gasabspaltenden Treibmittelpulver ein Verbund hergestellt wird, der gegebenenfalls zur Herstellung eines Bauteils umgeformt und anschließend derart thermisch behandelt wird, daß die Gasabspaltung des Treibmittelpulvers zur Aufschäumung des Kernes führt. Des weiteren betrifft die Erfindung Bauteile aus einem metallischen Verbundwerkstoff, die mittels des Verfahren hergestellt sind.

Derartige Verbundwerkstoffe beziehungsweise daraus hergestellte Bauteile zeichnen sich durch hohe Steifigkeit bei niedrigem Gewicht aus und finden ihre potentielle Anwendung überall im Leichtbau, insbesondere als Strukturteile - im Kraftfahrzeugbau, der Luft- und Raumfahrt. Des weiteren ermöglichen ihre niedrige Wärmeleitfähigkeit und ihr gutes mechanisches und akustisches Dämpfungsverhalten ihre Anwendung als thermisches und akustisches Isolationsmaterial sowie zur Absorbtion mechanischer Energie.

Entsprechende Verfahren zur Herstellung derartiger Verbundwerkstoffe und daraus gefertigter Bauteile sind aus verschieden Veröffentlichungen bekannt. Die DE 44 26 627 C2 beschreibt ein Verfahren, bei dem ein oder mehrere Metallpulver mit einem oder mehreren Treibmittelpulvern gemischt werden, und die so erhaltene Pulvermischung mittels axialen Heißpressens, heißisostatischen Pressens oder Walzens verdichtet und in einem anschließenden Arbeitsgang mit zuvor oberflächenbehandelten Metallblechen durch Walzplattieren zu einem Verbundwerkstoff zusammengefügt wird. Nach dem Umformen des so entstandenen Halbzeuges durch z.B. Pressen, Tiefziehen oder Biegen, wird dieser in einem letzten Schritt auf eine Temperatur erhitzt, die im Solidus-Liquidus- Bereich des Metallpulvers, jedoch unterhalb der Schmelztemperatur der Deckschichten liegt. Da das Treibmittelpulver derart gewählt ist, daß in diesem Temperaturbereich gleichzeitig dessen Gasabspaltung stattfindet, bilden sich hierbei geschlossene Poren innerhalb der zähflüssigen Kernschicht, einher gehend mit einer entsprechenden Volumenvergrößerung. Durch das anschließende Abkühlen des Verbundes wir die aufgeschäumte Kernschicht stabilisiert.

In Abwandlung des aus der DE 44 26 627 C2 bekannten Verfahrens, bei der der Pulverpressling bereits geschlossenporig ausgebildet ist, beschreibt die EP 1 000 690 A2 die Herstellung eines derartigen Verbundwerkstoffes auf Basis eines zuerst offenporig hergestellten Pulverpresslings, der erst beim späteren Walzplattieren mit den Deckschichten geschlossenporig wird. Die übrigen Verfahrensschritte sind identisch. Durch die ursprüngliche Offenporigkeit soll verhindert werden, dass bei der Lagerung des Pulverpresslings eventuelle Gasabspaltungen des Treibmittels zu Geometrieveränderungen des Presslings und damit zu Problemen bei der späteren Herstellung des Verbundes mit den Deckschichten führen. Des weiteren soll durch die Offenporigkeit der Aufbruch der sich bei der Lagerung des Presslings bildenden Oxidschichten bei der Herstellung des Verbundes erleichtert werden.

Durch die DE 41 24 591 C1 ist ein Verfahren zur Herstellung aufgeschäumter Verbundwerkstoffe bekannt, wobei die Pulvermischung in ein Metallhohlprofil eingefüllt und anschließend zusammen mit diesem gewalzt wird. Die Umformung des so entstandenen Halbzeuges und der anschließende Aufschäumvorgang erfolgen dabei in gleicher Weise wie in der DE 44 26 627 C2 beschrieben.

Der EP 0 997 215 A2 ist ein Verfahren zur Herstellung eines metallischen Verbundwerkstoffes, bestehend aus massiven metallischen Deckschichten und einem geschlossenporigen, metallischen Kern zu entnehmen, das die Herstellung der Kernschicht und die Verbindung mit den Deckschichten dadurch in einem Schritt vereint, daß die Pulvermischung in den Walzspalt zwischen die beiden Deckschichten eingebracht und somit zwischen diesen verdichtet wird. Des weiteren wird vorgeschlagen, das Pulver in Schutzgasatmosphäre zuzuführen, um so die Bildung von Oxidschichten zu unterbinden, die die erforderliche Verbindung zwischen Deckschichten und Pulvermischung negativ beeinflussen könnten.

In einem weiteren, durch die DE 197 53 658 A1 bekannten Verfahren zur Herstellung eines derartigen Verbundwerkstoffes werden die Prozeßschritte der Verbundherstellung zwischen Kern und Decklagen einerseits und des Aufschäumens andererseits dadurch vereint, dass der Kern in Form eines Pulverpresslings zwischen die in einer Form befindlichen Decklagen eingebracht wird und sich erst durch den Aufschäumvorgang mit diesen verbindet. Aufgrund der während des Aufschäumens vom Kern aufgebrachten Druckkraft werden die Decklagen dabei gleichzeitig einer der sie einschließenden Form entsprechenden Umformung unterworfen.

Aus der US 5 972 521 A ist ein Verfahren zur Herstellung eines Verbundwerkstoffrohlings bekannt, bei dem Luft und Feuchtigkeit durch Evakuieren aus dem Pulver entfernt werden. Anschließend wird die evakuierte Luft durch ein gegenüber dem Kernmaterial inertes, unter erhöhtem Druck stehendes Gas ersetzt, und zwar bevor das Pulver verdichtet und mit den Deckschichten verbunden wird.

All diesen aus dem Stand der Technik bekannten Verfahren ist gemeinsam, daß durch die Herstellung der aufzuschäumenden Kernschicht Luft bzw. Schutzgas bei der Kompaktierung zwischen den Metallpulverpartikeln eingeschlossen und abhängig vom Kompaktierungsgrad verdichtet wird. Die dabei entstehenden Gasdrücke, die bei der Temperaturerhöhung während des Aufschäumvorganges noch weiter ansteigen, führen während des Aufheizens noch vor Erreichen der dem Solidus-Liquidus- Bereich des Metallpulvermaterials entsprechenden Temperatur zur Bildung von Poren. Im Gegensatz zu den mittels dieser Verfahren angestrebten, durch das Ausgasen des Treibmittelpulvers im Solidus-Liquidus-Bereich des Metallpulvers stattfindenden, geschlossenen, kugelförmigen Poren, handelt es sich hier um offene, rißförmig miteinander verbundene und unregelmäßig geformte Poren. Während zum Beispiel aus der US 5 564 064 A1 ein Verfahren bekannt ist, das gezielt eine derartige, offene Porosität durch Expansion eingeschlossener Gase unterhalb der Schmelztemperatur des Pulvermaterials anstrebt, ist bei den zuvor beschriebenen Verfahren eine derartige Porenbildung nicht wünschenswert, da nur die angestrebten geschlossenen, kugelförmigen Poren eine optimale Lastübertragung über die möglichst intakten, die Poren umgebenden Zellwände ermöglichen, und damit wesentlich zur Festigkeit der Kernschäume und damit des Verbundwerstoffes beitragen.

Des weiteren agieren die bereits bei wesentlich unterhalb des Schmelzpunktes des Pulvermaterials liegenden Temperaturen gebildeten, offenen, rißförmig verbundenen Poren als "Sammelräume" für die bei der Ausgasung des Treibmittels entstehenden Gase. Dadurch wird eine homogene Ausbildung möglichst gleichmäßiger, geschlossener Poren beeinträchtigt, die wesentlich für homogene Werkstoffeigenschaften und insbesondere eine hohe Festigkeit sind. Da während des Schäumvorganges lediglich die Schmelztemperatur der Kernschicht, nicht jedoch die der Deckschichten erreicht wird - und somit ein Ausweichen der Gase an den Deckschichten behindert wird, kommt es insbesondere in dem den Deckschichten unmittelbar benachbarten Bereich der Kernschicht zur Bildung unregelmäßig geformter, großvolumiger Poren, wodurch eine optimale Verbindung zwischen Kern und Deckschichten an diesen Stellen verhindert wird. Es treten also lokale Delaminationsstellen auf.

Einen ähnlichen Effekt wie die durch die Kompaktierung des Kernmaterials eingeschlossenen Gase bewirkt die Luftfeuchtigkeit, der das Pulvermaterial während der Lagerung, dem Transport und der Verarbeitung ausgesetzt ist. Aufgrund des hydrophilen Verhaltens zahlreicher Pulver wird aus der Luft stammende Feuchtigkeit im Kernmaterial eingeschlossen, die bereits bei relativ niedrigen Temperaturen beim Aufheizen verdampft und, wie zuvor beschrieben, bei Temperaturen weit unterhalb der Schmelztemperatur des Kernmaterials zur Bildung unregelmäßiger, offener Porosität mit den damit verbundenen Nachteilen führt.

Während eine von der Ausgasung des Treibmittelpulvers im zähflüssigen Solidus-Liquidus Bereich der Kernschicht herrührende Porosität weitestgehend dadurch homogen gehalten werden, daß das Treibmittelpulver eine möglichst niedrige Korngrößenstreuung aufweist und eine möglichst homogene Mischung mit dem Pulver des Kernmaterials hergestellt wird, ist die von den Gaseinschlüssen und der Feuchtigkeit hervorgerufene Porosität weitgehend unkontrollierbar.

Dieser Umstand ist hauptverantwortlich für die Streuung von Materialkennwerten innerhalb einer Produktionsserie und generell mangelhafte Reproduzierbarkeit von Verbundwerkstoffen, die aus massiven metallischen Deckschichten und einem dazwischen angeordnetem, aus Metallpulver und Treibmittelpulver aufgeschäumten, geschlossenporigem Metallkern bestehen.

Zusätzlich fördert das Vorhandensein von Luft und Feuchtigkeit auch die Bildung von Oxiden, wodurch sowohl die metallische Bindung zwischen den Pulverpartikeln der Kernschicht, als auch deren Verbindung mit den Deckschichten behindert wird.

Durch die EP 0 927 590 A2 ist ein Verfahren bekannt geworden, das dazu geeignet ist, Gasansammlungen und die durch sie bedingte unregelmäßige Porosität und lokale Delaminationsstellen dadurch zu unterbinden, daß die Deckschichten in regelmäßigem Abstand Lochungen aufweisen, die während des Aufschäumens ein Entweichen der überschüssigen Gase ermöglichen.

Sowohl aus konstruktiven, wie aus optischen Gründen bietet eine derartige Lochung der Deckschichten jedoch keine allgemein befriedigende Lösung.

Ziel der Erfindung ist es daher, einen Verbundwerkstoff sowie daraus gefertigte Bauteile bestehend aus massiven metallischen Deckschichten und einem dazwischen angeordnetem, geschlossenporigem Metallschaumkern herzustellen, die diese Nachteile nicht aufweisen, ohne daß eine derartige Lochung der Deckbleche notwendig ist.

Insbesondere ist Ziel der Erfindung ein Verfahren, das dazu geeignet ist, einen Verbundwerkstoff beziehungsweise daraus gefertigte Bauteile bestehend aus massiven metallischen Deckschichten und einem dazwischen angeordnetem, geschlossenporigem Metallschaumkern herzustellen, wobei die Porosität allein von der Ausgasung des homogen im Kernmaterial verteilten Treibmittelpulvers in einem Temperaturbereich nahe der Schmelztemperatur des pulverförmigen Kernmaterials herrührt, und die unkontrollierte Bildung von Poren aufgrund der im Material eingeschlossenen Gase und/oder Feuchtigkeit praktisch unterbunden wird.

Ein weiteres Ziel der Erfindung ist es, den in weiteren Schritten umzuformenden und aufzuschäumenden Verbundwerkstoff-Rohling, bestehend aus massiven metallischen Deckschichten und einer dazwischen angeordneten, aus einem oder mehreren Metallpulvern und mindestens einem Treibmittelpulver bestehenden Kernschicht mittels eines Verfahrens herzustellen, das möglichst wenige, einfache Arbeitsschritte aufweist, so daß sich eine kostengünstige Herstellung ergibt.

Diese Ziele werden dadurch erreicht, daß ein möglichst homogenes Gemisch aus Metallpulver und Treibmittelpulver verwendet wird, diesem die durch sein hydrophiles Verhalten absorbierte Feuchtigkeit entzogen wird, und anschließend der gesamte Prozeß von der Kompaktierung des Pulvergemisches bis hin zur Plattierung mit den Deckschichten unter Ausschluß von Luft oder anderen Gasen stattfindet. Dadurch wird zumindest weitgehend verhindert, daß es in der Kernschicht des Materials während eines der Arbeitsschritte zu Einschlüssen von Gasen oder Feuchtigkeit kommt, die während des mit dem Aufschäumen verbundenen Aufheizvorganges zu der zuvor beschrieben, unkontrollierten Bildung von Poren bereits unterhalb der Solidus-Liquidus Temperatur des Metallpulvers kommt.

Der Entzug der Feuchtigkeit kann vor dem Verdichten unter Vakuum und/oder durch Erhitzen geschehen. Dabei ist zu beachten, daß die Temperaturen unterhalb der Ausgastemperaturen des Treibmittels bleiben, die durch das Vakuum herabgesetzt werden.

Anschließend wird die Pulvermischung unter Vakuum mittels gebräuchlicher Methoden wie axialen Kalt - oder Heißpressens, kalt- oder heißisostatischen Pressens verdichtet und der entstandene Pulverrohling ebenfalls unter Vakuum mit den Metallblechen der Deckschichten unter Druckeinwirkung verbunden.

Während es möglich ist, vor jedem Arbeitsschritt erneut ein Vakuum herzustellen, wird in bevorzugter Weise sowohl die Trocknung des Pulvers, als auch das anschließende Verdichten und das Plattieren innerhalb des gleichen Vakuums durchgeführt, also ohne daß das Vakuum während des gesamten Herstellungsprozesses des Verbundrohlings unterbrochen wird.

Entsprechend dem bevorzugten Herstellungsverfahren wird der Feuchtigkeitsentzug der Pulvermischung dadurch erreicht, daß die Pulvermischung aus einem oder mehreren Metallpulvern und mindestens einem Treibmittelpulver solange in einem Behälter unter Vakuum gehalten wird, bis das im Pulver gebundene Wasser weitestgehend verdampft ist, wobei der Vakuumbehälter derart gestaltet ist, daß in ihm das Pulver verdichtet wird und daß er gleichzeitig die Deckschichten des späteren Verbundwerkstoffes bildet. Auf diese Weise findet bei der Verdichtung des Pulvers gleichzeitig die Verbindung des Pulverkerns mit den Deckschichten in Form der Behälterwände statt. Dadurch ist während des gesamten Herstellungsprozesses für den Verbundwerkstoff-Rohling nur ein einziger Abpumpvorgang zur Herstellung eines Vakuums von Nöten, wodurch der Herstellungsprozeß erheblich beschleunigt und vereinfacht wird.

Der so entstandene Verbundwerkstoff-Rohling kann dann - wie aus dem Stand der Technik bekannt - zu einem Halbzeug umgeformt und dieses zur Herstellung eines Bauteils aufgeschäumt werden.

Die Erfindung wird nachstehend anhand des in den Zeichnungen dargestellten, bevorzugten Verfahrens näher erläutert.

Es zeigen:
Fig. 1: Flußdiagramm zur Veranschaulichung eines bevorzugten Verfahren zur Herstellung eines Verbundwerkstoff-Rohlings bestehend aus Deckschichten und einer aufzuschäumenden Kernschicht
Fig. 2: Schnittdarstellung des Vakuumbehälters zur Durchführung des in Fig. 1 dargestellten Verfahrens
Fig. 3: Weiterverarbeitung des Verbundwerkstoff-Rohlings zu einem Halbzeug und dessen Weiterverarbeitung zu einem Bauteil

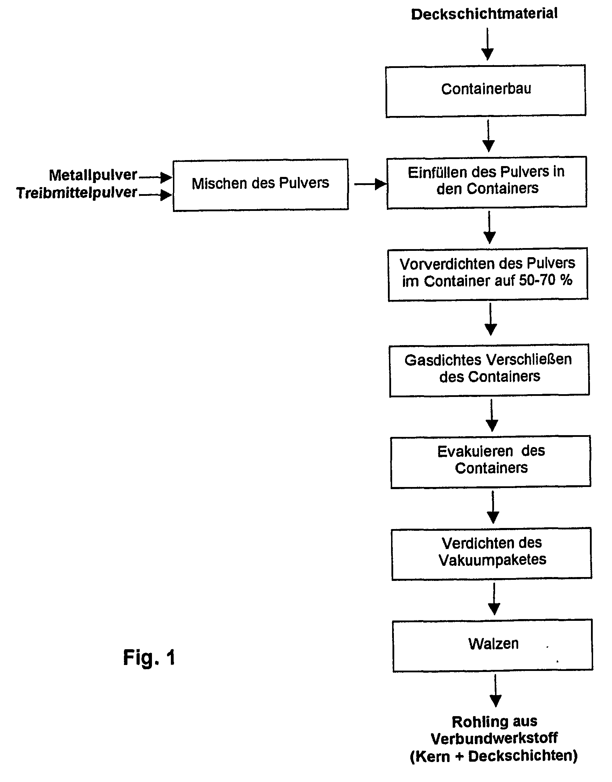

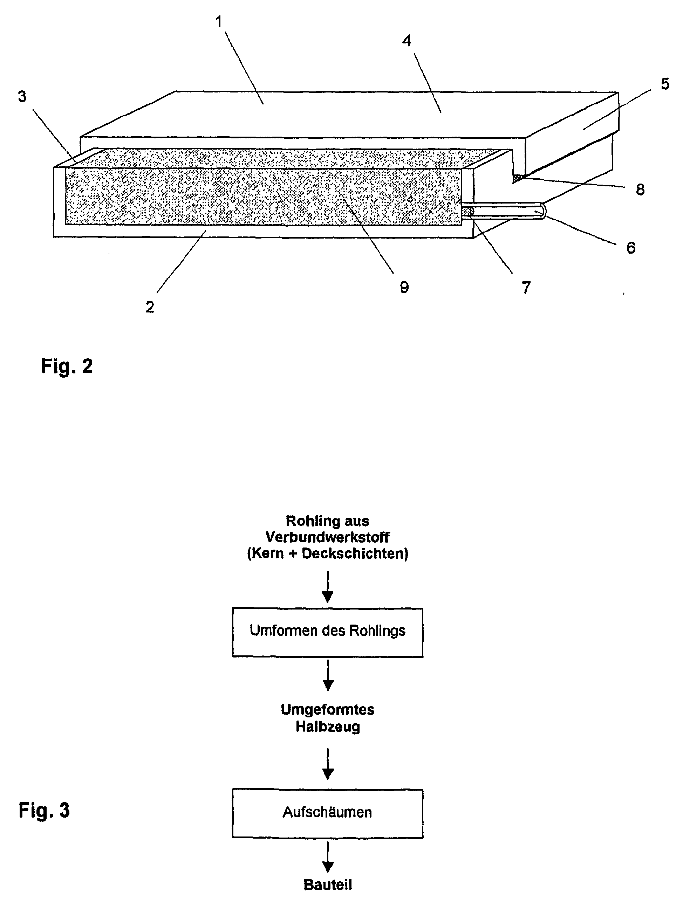

Fig. 1 zeigt das bevorzugte Verfahren zur Herstellung eines Verbundwerkstoff-Rohlings bestehend aus Deckschichten und einer aufzuschäumenden Kernschicht. Dazu wird in einem ersten Arbeitsschritt ein Vakuumcontainer (1) gebaut. Dieser besteht, wie in der Schnittdarstellung in Fig.2 gezeigt, aus einem aus dem Deckschichtmaterial gefertigten, kastenförmig aus Boden (2) und Wänden (3) bestehenden Containerunterteil und einem ebenfalls aus dem Deckschichtmaterial gefertigten Deckel (4). Letzterer weist einen umlaufenden, nach unten gerichteten Rand (5) auf, so daß beim Zusammenfügen des Deckels (4) mit dem Unterteil (2,3) der Rand (5) die Außenwände (3) des Unterteils (2,3) dicht umschließt. Des weiteren weist das Unterteil (2,3) einen in seine Wand (3) eingeschweißten, rohrförmigen Vakuumanschluß (6), in dessen Inneres ein Filter (7) eingesetzt ist. Letzterer besteht zum Beispiel aus Stahlwolle und verhindert, daß beim Evakuieren Pulvermaterial (9) aus dem Containerinneren angesaugt wird.

In einem zweiten Arbeitsschritt wird die aus einem oder mehreren Metallpulvern und mindestens einem Treibmittelpulver bestehende, möglichst homogene Pulvermischung (9) hergestellt und anschließend in das Containerunterteil (2,3) eingefüllt und in diesem mittels axialen Pressens auf 50-70 % vorverdichtet. Dabei ist zu beachten, daß die Pulverfüllung das Containerunterteil (2,3) bis zum oberem Rand seiner Wand (3) komplett ausfüllt. Alternativ ist es auch möglich, einen aus der Pulvermischung vorgefertigten, kompaktierten Pulverkörper (nicht gezeigt) in das Containerunterteil (2,3) einzulegen. Dabei ist zu beachten, daß beide möglichst wenig Spiel aufweisen um somit ebenfalls eine möglichst komplette Füllung zu erreichen. Ein derartiger Pulverkörper kann mittels pulvertechnologisch üblicher Verfahren wie etwa kaltisostatischen Pressens (CIP), heißisostatischen Pressens (HIP) oder auch axialen Pressens unter Vakuum hergestellt werden.

Nach der Befüllung des Containerunterteils (2,3) wird der Deckel (4) aufgesetzt und beide Teile mittels einer Schweißnaht (8) entlang der Unterkante des Deckelrandes (5) vakuumdicht miteinander verschweißt. Anschließend wird der Vakuumanschluß (6) mit einer Vakuumpumpe verbunden und der Container(1) evakuiert. Dabei wird das Vakuum solange durch ständiges Abpumpen aufrechterhalten, bis das Containerinnere und das darin eingeschlossene Pulver (9) weitestgehend frei von eingeschossenen Gasen und der im Pulver gebundenen Feuchtigkeit ist. In der Praxis bieten sich hierzu Hochvakuumdrücke im Bereich von 10⁻³ bis 10⁻⁴ mbar an. Durch eventuelles Aufheizen des Containers (1) ist es möglich, diesen Prozeß zu beschleunigen; allerdings ist dabei zu beachten, daß die Temperatur dabei die durch das Vakuum zusätzlich herabgesetzte Ausgasstemperatur des Treibmittelpulvers nicht erreicht.

Vor dem Abtrennen der Vakuumpumpe vom Anschluß (6) wird letztere z.B. durch Zuschweißen verschlossen, so daß das Vakuum im Innern aufrechterhalten bleibt.

Anschließend wird das komplette, aus Container (1) und Pulvermischung (9) bestehende Vakuumpaket durch Hochgeschwindigkeitsschmieden, Explosionsschmieden, axiales Pressen, kaltisostatisches Pressen (CIP) oder heißisostatisches Pressen (HIP) unterhalb der Ausgastemperatur des Treibmittelpulvers verdichtet. Dadurch wird die Pulvermischung (9) abhängig vom gewählten Pressverfahren auf 80 bis nahezu 100 % verdichtet und gleichzeitig eine metallische Verbindung zwischen der Pulverschicht (9) und den aus dem Boden (2) und dem Deckel (3) des Containers (1) bestehenden Deckblechen erreicht.

Das Innere des Containers bleibt bei diesem Verfahrensschritt weiterhin unter Vakuum, auch wenn der Druck abhängig von den Füllgraden des Containers vor und nach dem Verdichten zunimmt. Ausgehend von einer theoretischen Dichte bzw. einem Füllgrad des Pulvers von ca. 60% vor der Verdichtung und typischen 96 % danach, ergibt sich ein Druck im verdichteten Vakuumbehälter, der ca. 16 mal so groß ist wie der Druck vor seiner Verdichtung.

Ausgehend von Hochvakuumdrücken im Bereich von 10⁻³ bis 10⁻⁴ mbar vor der Verdichtung liegen die Drücke im Container nach seiner Verdichtung also immer noch in Bereichen weit kleiner als 1 mbar, der oberen Grenze des Feinvakuums. Der Container und der darin enthaltene Pulverkörper sind also faktisch frei von Einschlüssen von Gasen und Feuchtigkeit.

Zwar kann es insbesondere beim Hochgeschwindigkeits- bzw. Explosionsschmieden zu einem Aufreißen des Containers (1) entlang seiner Ränder (3,5) kommen. Da der Umformprozeß unterstützt vom Vakuum im Innern jedoch sehr schnell von statten geht (wenige Millisekunden beim Explosionsschmieden) und dabei ein extrem dichter Pulverkern (9) mit aus Boden (2) und Deckel (3) des Containers (1) bestehenden Deckschichten entsteht ist ein Eindringen von Luft und Feuchtigkeit ab diesem Arbeitsschritt kaum mehr möglich,

Mittels Walzen wird das so entstandene Paket zu einem flächigen Verbundwerkstoff-Rohling weiter umgeformt.

Dieser kann anschließend wie in Fig. 3 gezeigt zu einem Halbzeug in Form des späteren Bauteils umgeformt werden. Dabei kommen als Umformverfahren übliche Methoden wie etwa Tiefziehen in Frage, durch die der flächige Verbundwerkstoff-Rohling in ein dreidimensionales, d.h. gekrümmtes Halbzeug übergeführt wird.

In einem letzten Arbeitsschritt wird dieses Halbzeug bis zum Solidus-Liquidus-Bereich des Metallpulvers aufgeheizt, wobei die Ausgastemperatur des Treibmittels überschritten und somit dessen Ausgasen erreicht wird. Wie zuvor beschrieben ist das Deckmaterial derart gewählt, daß seine Schmelztemperatur entsprechend höher liegt und ein Schmelzen der Deckschichten somit nicht stattfindet.

Im Falle, daß sowohl für die Kernschicht als auch die Deckschichten das gleiche Material, etwa Aluminium verwendet wird, können die unterschiedlichen Schmelztemperaturen durch unterschiedliche Legierungszusätze in Pulver und Deckschichtmaterial entsprechend eingestellt werden.

Als Treibmittel hat sich insbesondere für Aluminium Titanhydrid bewährt, das dem Metallpulver in einer Menge von 0,3 - 1,9 Gewichtsprozent beigemischt wird.

## Patentansprüche

1. Verfahren zur Herstellung eines durch Erhitzen aufschäumbaren Verbundwerkstoff-Halbzeuges zur Fertigung von Bauteilen die aus massiven metallischen Deckschichten (2 - 5) und einem dazwischen angeordnetem, geschlossenporigem Metallschaumkern bestehen, bei welchem Verfahren ein Pulvergemisch (9) aus mindestens einem Metallpulver und mindestens einem Treibmittelpulver zu einer Kernschicht verdichtet und die Kernschicht mit mindestens einer oxidfreien Deckschicht unter Druckeinwirkung und bei Temperaturen unterhalb der Ausgastemperatur des Treibmittels zu dem Verbundwerkstoff-Halbzeug metallisch verbunden wird, **dadurch gekennzeichnet, daß** dem Pulvergemisch (9) vor seiner Verdichtung Gase und Feuchtigkeit durch Vakuum entzogen werden, und auch das Verbinden der Kernschicht mit mindestens einer Deckschicht unter Vakuum durchgeführt wird.

2. Verfahren nach Anspruch 1 **dadurch gekennzeichnet, daß** ein aus dem Deckschichtmaterial gefertigter Container (1) vollständig mit dem Pulvergemisch (9) gefüllt, anschließend vakuumdicht verschlossen und evakuiert wird und durch von außen auf den Container wirkenden Druck gleichzeitig das Pulvergemisch (9) verdichtet und mit dem Boden (2) und Deckel (4) des Containers (1) zum Verbundwerkstoff-Halbzeug metallisch verbunden wird.

3. Verfahren nach Anspruch 2 **dadurch gekennzeichnet, daß** das Pulvergemisch (9) vor Einbringen in den Container (1) zu einem CIP- oder HIP-Körper vorverdichtet wird.

4. Verfahren nach einem der Ansprüche 2 oder 3, **dadurch gekennzeichnet, daß** die äußere Druckeinwirkung auf den Container (1) durch Hochgeschwindigkeitsschmieden, Explosionsschmieden, axiales Pressen, kaltisostatisches Pressen (CIP) oder heißisostatisches Pressen (HIP) erreicht wird.

5. Verfahren nach einem der vorhergehenden Ansprüche, **dadurch gekennzeichnet, daß** der Entzug der Feuchtigkeit aus dem Pulvergemisch (9) mittels Vakuum durch zusätzliches Aufheizen des Pulvergemisches (9) auf eine Temperatur unterhalb der Ausgastemperatur des Treibmittels unterstützt wird.

6. Verfahren zur Fertigung eines Bauteiles aus dem Verbundwerkstoff-Halbzeug nach einem der vorhergehenden Ansprüche, **dadurch gekennzeichnet, daß** das Verbundwerkstoff-Halbzeug zu einem dem späteren Bauteil in der Form entsprechenden Formteil umgeformt und das Formteil durch Erhitzen auf eine Temperatur, die gleichzeitig oberhalb der Ausgastemperatur des Treibmittelpulvers und innerhalb des Solidus-Liquidus-Bereiches des Metallpulvers, aber unterhalb der Schmelztemperatur des Deckschichtmaterials liegt, zum Bauteil aufgeschäumt wird.

7. Nach einem der Verfahrensansprüche 1 bis 5 herstellbares Verbundwerkstoff-Halbzeug aus massiven metallischen Deckschichten (2 - 5) und einer dazwischen angeordneten, aus mindestens einem Metallpulver und mindestens einem Treibmittelpulver bestehenden Kernschicht, die unter Unterdruck steht und praktisch frei von Feuchtigkeits- und Fremdgas-Einschlüssen ist.

8. Verbundwerkstoff-Halbzeug nach Anspruch 7 **dadurch gekennzeichnet, daß** die Kernschicht und Deckschichten (2 - 5) aus Aluminium bestehen und als Treibmittel 0,3 - 1,9 Gewichtsprozent Titanhydrid-Pulver dem Metallpulver der Kernschicht beigemischt sind.

9. Nach dem Verfahrensanspruch 6 aus einem Verbundwerkstoff-Halbzeug nach Anspruch 7 oder 8 hergestelltes Bauteil, das aus massiven metallischen Deckschichten (2 - 5) und einem dazwischen angeordnetem, geschlossenporigem Metallschaumkern besteht und im Grenzbereich zwischen seinen Deckschichten (2 - 5) und seinem Kernmaterial frei ist von Delaminationsstellen in Form flächig ausgedehnter, im Vergleich zur normalen Schaumporosität großvolumiger Gaseinschlüsse.

10. Verwendung des Bauteils nach Anspruch 9 als Leichtbau-Strukturteil, insbesondere im Kraftfahrzeugbau, im Schiffbau oder der Luft- und Raumfahrttechnik.

11. Verwendung des Bauteils nach Anspruch 9 als mechanische Energie absorbierendes Bauteil, insbesondere im Kraftfahrzeugbau, der Luft- und Raumfahrttechnik oder dem Bau von Transportcontainem für zerbrechliche Güter, chemische, nukleare oder explosive Gefahrenstoffe.

12. Verwendung des Bauteils nach Anspruch 9 zum Zwecke thermischer oder akustischer Isolation.

## Claims

1. Method for manufacturing a composite semi-finished product for the fabrication of structural components, which consists of solid metal covering layers (2 - 5) with a closed-cell, metal-foam core disposed between them, wherein a powder mixture (9) of at least one metallic powder and at least one propellant powder is compacted to form a core layer, and the core layer is connected by metallic connection, under the influence of pressure and at temperatures below the outgassing temperature of the propellant to at least one oxide-free covering layer to form the composite semi-finished product,
**characterised in that**
gasses and moisture are removed from the powder mixture (9) before compacting, and that the connection of the core layer to at least one covering layer is also formed under vacuum.

2. Method according to claim 1
**characterised in that**
a container (1) made from the covering-layer material is completely filled with the powder mixture (9), sealed in a vacuum-tight manner and evacuated, and that the powder mixture (9) is simultaneously compacted by pressure acting on the container from the outside and connected by metallic connection to the base (2) and the cover (4) of the container (1) to form the composite semi-finished product.

3. Method according to claim 2,
**characterised in that**
the powder mixture (9) is pre-compacted to form a CIP or HIP element before being introduced into the container (1).

4. Method according to any one of claims 2 or 3,
**characterised in that**
the action of external pressure on the container (1) is achieved by high-speed forging, explosion forging, axial pressing, cold isostatic pressing (CIP) or hot isostatic pressing (HIP).

5. Method according to any one of the preceding claims,
**characterised in that**
the removal of moisture from the powder mixture (9) by means of vacuum is supported by additional heating of the powder mixture (9) to a temperature below the outgassing temperature of the propellant.

6. Method for the fabrication of a structural component made from the composite semi-finished product according to any one of the preceding claims,
**characterised in that**
the composite semi-finished product is formed into a formed part corresponding to the shape of the subsequent structural component, and that the formed part is foamed to form the structural component by heating to a temperature, which is at the same time above the outgassing temperature of the propellant powder and within the solidus-liquidus range of the metallic powder, but below the melting temperature of the covering-layer material.

7. Composite semi-finished product capable of being manufactured according to any one of the method claims 1 to 5 and made from solid metal covering layers (2 - 5) with a core layer disposed between them, which consists of at least one metallic powder and at least one propellant powder and which is held under vacuum pressure and is practically free from inclusions of moisture and foreign gas.

8. Composite semi-finished product according to claim 7,
**characterised in that**
the core layer and covering layers (2 - 5) consist of aluminium, and that 0.3 - 1.9 percent by weight titanium-hydride powder are added to the metallic powder of the core layer.

9. Structural component manufactured according to the method claim 6 from a composite semi-finished product according to claim 7 or 8, which consists of solid metal covering layers (2 - 5) with a closed-cell, metal-foam core disposed between them, and which is free, in the boundary region between its covering layers (2 - 5) and its core material, from delaminations in the form of extended, flat gaseous inclusions of large volume relative to the normal porosity of the foam.

10. Use of the structural component according to claim 9 as a light-weight structural component, especially in motor-vehicle construction, ship building or aeronautical and space technology.

11. Use of the structural component according to claim 9 as a mechanical-energy-absorbing structural component, especially in motor-vehicle construction, aeronautical and space technology or in the construction of transport containers for fragile goods, chemical, nuclear or explosive hazardous substances.

12. Use of the structural component according to claim 9 for the purpose of thermal or acoustic insulation.

## Revendications

1. Procédé de production d'un produit semi-fini à base de matériau composite pouvant être expansé par chauffage, pour la fabrication de composants qui se composent de couches de recouvrement (2 - 5) métalliques massives et d'une âme cellulaire métallique à alvéoles fermées disposée entre ces couches de recouvrement, procédé au cours duquel un mélange de poudre (9) se composant d'au moins une poudre métallique et d'au moins une poudre d'agent d'expansion est comprimé pour former une couche de l'âme centrale, et la couche de l'âme centrale, avec au moins une couche de recouvrement sans oxyde, est combinée métalliquement au produit semi-fini à base de matériau composite, sous l'effet de la compression et à des températures inférieures à la température des gaz de dégagement de l'agent d'expansion, **caractérisé en ce que** des gaz et de l'humidité, par un processus sous vide, sont éliminés du mélange de poudre (9) avant sa compression, et la combinaison de la couche de l'âme centrale, avec au moins une couche de recouvrement, est effectuée également sous vide.

2. Procédé selon la revendication 1, **caractérisé en ce qu'**un conteneur (1) fabriqué à partir du matériau de la couche de recouvrement est complètement rempli du mélange de poudre (9), puis obturé de façon étanche au vide et évacué, et le mélange de poudre (9) est comprimé, en même temps, par la compression agissant de l'extérieur sur le conteneur et, par le fond (2) et le couvercle (4) du conteneur (1), est combiné métalliquement au produit semi-fini à base de matériau composite.

3. Procédé selon la revendication 2, **caractérisé en ce que** le mélange de poudre (9), avant l'introduction dans le conteneur (1), est précomprimé pour former un corps obtenu par compression isostatique à froid (CIP) ou par compression isostatique à chaud (HIP).

4. Procédé selon la revendication 2 ou 3, **caractérisé en ce que** l'effet extérieur de la compression, sur le conteneur (1), est obtenu par forgeage à grande vitesse, par forgeage par explosion, par compression axiale, par compression isostatique à froid (CIP) ou par compression isostatique à chaud (HIP).

5. Procédé selon l'une quelconque des revendications précédentes, **caractérisé en ce que** l'élimination par le vide de l'humidité contenue dans le mélange de poudre (9) est favorisée par un chauffage supplémentaire du mélange de poudre (9), à une température inférieure à la température des gaz de dégagement de l'agent d'expansion.

6. Procédé de fabrication d'un composant issu du produit semi-fini à base de matériau composite selon l'une quelconque des revendications précédentes, **caractérisé en ce que** le produit semi-fini à base de matériau composite est transformé en une pièce de forme correspondant, dans la forme, au composant ultérieur, et la pièce de forme, par chauffage à une température qui est en même temps supérieure à la température des gaz de dégagement de la poudre de l'agent d'expansion et dans les limites de la zone solidus / liquidus de la poudre métallique, mais inférieure à la température de fusion du matériau de la couche de recouvrement, est expansée pour former le composant.

7. Produit semi-fini à base de matériau composite pouvant être fabriqué selon l'une quelconque des revendications 1 à 5 du procédé, ledit produit semi-fini se composant de couches de recouvrement (2 - 5) métalliques massives et d'une couche de l'âme centrale disposée entre ces couches de recouvrement et se composant d'au moins une poudre métallique et d'au moins une poudre d'agent d'expansion, laquelle couche de l'âme centrale est sous vide et pratiquement exempte de poches d'humidité et de gaz étrangers.

8. Produit semi-fini à base de matériau composite selon la revendication 7, **caractérisé en ce que** la couche de l'âme centrale et les couches de recouvrement (2 - 5) sont en aluminium, et une quantité comprise entre 0,3 pour cent en poids et 1,9 pour cent en poids de poudre d'hydride de titane, servant d'agent d'expansion, est mélangée à de la poudre métallique de la couche de l'âme centrale.

9. Composant fabriqué selon la revendication 7 ou 8, à partir d'un produit semi-fini à base de matériau composite selon la revendication 6 du procédé, lequel composant se compose de couches de recouvrement (2 - 5) métalliques massives et d'une âme cellulaire métallique à alvéoles fermées disposée entre ces couches de recouvrement et, dans la zone limite comprise entre ses couches de recouvrement (2 - 5) et le matériau de son âme cellulaire, est exempt d'emplacements de délamination se présentant sous la forme de poches de gaz de grand volume s'étendant à plat, par comparaison avec la porosité cellulaire normale.

10. Utilisation du composant selon la revendication 9 comme pièce de structure de construction légère, en particulier dans le secteur de la construction automobile, de la construction navale ou bien dans le secteur de la technique de l'air et de la technique spatiale.

11. Utilisation du composant selon la revendication 9 comme composant absorbant une énergie mécanique, en particulier dans le secteur de la construction automobile, de la technique de l'air et de la technique spatiale ou bien dans le secteur de la construction de conteneurs de transport pour des marchandises fragiles, pour des matières chimiques, nucléaires ou explosives qui sont dangereuses.

12. Utilisation du composant selon la revendication 9, à des fins d'isolation thermique ou acoustique.
